# EUROPÄISCHE PATENTSCHRIFT

(11) **EP 2 426 867 B1**
(45) Veröffentlichungstag und Bekanntmachung des Hinweises auf die Patenterteilung: **01.04.2015**
(21) Anmeldenummer: 11173017.2
(22) Anmeldetag: 07.07.2011
(51) Int. Cl.: H04L 12/28, H04L 29/06, G01D 4/00

(54) **Schnittstelleneinreichtung für ein Messstellennetz**
Interface device for a metering device network
Moyen d'interface en réseau de dispositif de mesure

(30) Priorität: 03.09.2010 DE 102010044346
(43) Veröffentlichungstag der Anmeldung: 07.03.2012
(73) Patentinhaber: RWE Rheinland Westfalen Netz AG, 45128 Essen (DE)
(72) Erfinder: Kneitinger, Hans-Werner, 40882 Ratingen (DE)
(74) Vertreter: Cohausz & Florack

(56) Entgegenhaltungen:
- WO-A1-2007/090225
- WO-A2-2007/109149
- US-A1- 2009 322 556

## Beschreibung

Der Gegenstand betrifft eine Messstellennetzschnittstelleneinrichtung zur Kommunikation mit einem Messstellennetz sowie ein System mit einem Messstellennetz sowie Messstellennetzschnittstelleneinrichtungen.

Im Bereich der Heimautomatisierung werden Sensoren und Aktoren eingesetzt, um elektrische Geräte zu steuern und Zustände zu überwachen. So kann z.B. ein elektrischer/elekronischer Haushaltszähler (eHz) als Sensor zum Messen von Verbrauchswerten und als Aktor z.B. zum Unterbrechen der Stromversogung (Breaker) eingesetzt werden. Elekronische Haushaltszähler (eHz) für das Messen von Energiemengen (Strom, Gas) werden politisch gefordert und gefördert. Die elektronischen Haushaltszähler verfügen über Messstellenbetreiberschnittstellen (MSB-Schnittstelle), mit deren Hilfe Informationen zu einem Zählerstand, eine Zähleridentifikation, eine Zeitinformationen und dergleichen ausgelesen werden können. Ferner können über diese MSB-Schnittstellen Informationen in die elektronischen Haushaltszähler eingespeist werden, um beispielsweise variable Tarifinformationen den elektronischen Haushaltszählern zur Verfügung zu stellen.

Im Rahmen der Energiesparbemühungen soll es Kunden ermöglicht werden, jederzeit Informationen zu der momentan verbrauchten Energie, insbesondere zu der momentan verbrauchten elektrischen Energie, zu erhalten. Hierzu müssen geeignete Anzeigevorrichtungen den Kunden zur Verfügung gestellt werden. So besteht derzeit die Überlegung, den Kunden die aktuellen Zählerstände abrufbar auf ihren Heim-PCs zur Verfügung zu stellen. Hierzu müssen diese Computer mit den jeweiligen den Kunden zugeordneten elektronischen Haushaltszählern verbunden werden. Eine solche Verbindung kann beispielsweise durch ein Multi Utility Communication Controller (MUC-C) zur Verfügung gestellt werden. Ein MUC-C ermöglicht die Verbindung zwischen dem elektronischen Haushaltszähler und dem Heimatnetz des Nutzers.

Der MUC-C- ist dazu ausgelegt, über die MSB-Schnittstelle Mess- und Servicedaten auszulesen und in das Kundennetz, beispielsweise per TCP/IP einzuspeisen.

Es hat sich jedoch herausgestellt, dass die Eins-zu-Eins Verbindung zwischen MUC-C und Heimnetz kostenintensiv ist. Aus diesem Grunde wird versucht, mehrere elektronische Haushaltszähler mit einem MUC-C zu verbinden, um dann den Lesezugriff der Kunden auf die ihnen zugeordneten elektronischen Haushaltszähler über den einen MUC-C zu kanalisieren. Somit können die Kosten für mehrere MUC-C eingespart werden.

Es kann nicht sichergestellt werden, dass, wenn mehrere Kunden mit ihren Netzen auf den MUC-C zugreifen, ein Übersprechen der Daten zwischen den Kundennetzen auftritt. Auch können Kollisionen in den von den Kunden benutzten Adressbereichen (IP-Adressen) entstehen, so dass unvorhersehbare Probleme bei einem Mehrfachzugriff auf ein MUC-C bestehen.

Die WO 2007/090225 A1 beschreibt ein Verbraucherterminal, bestehend aus einer Kommunikationsschnittstelle und einem Messgerätezähler, welches die herkömmlichen Zähler ersetzen soll. Das Verbraucherterminal wird hierbei in eine bereits existierende Verkabelung integriert und ist einerseits mit dem Stromnetz und andererseits mit einem Weitverkehrsnetz verbunden. Der laufend ermittelte Stromverbrauch wird schließlich über das Verbraucherterminal und das daran angeschlossene Weitverkehrsnetz zu Abrechnungszwecken an das Versorgungsunternehmen gesendet.

Die US 2009/0322556 A1 offenbart ein Verfahren und ein System zur Übertragung von Verbrauchsdaten über ein öffentliches Telefonnetzwerk, wobei über eine mit einem Energiemesszähler verbundene Datensammeleinrichtung Verbraucherdaten gesammelt und automatisch an einen Anschlusspunkt gesendet werden. Ein daran angeschlossenes DSL-Modem moduliert die Daten gegebenenfalls und schickt diese schließlich über einen Internetzugangspunkt zu dem Energieversorger.

Die WO 2007/109149 A2 betrifft Durchflusszählernetzwerke und -systeme zur Überwachung von mehreren Getränkeausgabesystemen. Hierzu ist eine Recheneinheit einerseits mit zumindest einem Zähler verbunden, zwecks Berechnung des Verbrauchs, und andererseits mit einem intelligent network interface module (AINIM). Dieses überwacht automatisch und kontinuierlich die Recheneinheit und bezieht von diesem die Verbrauchsdaten, welche schließlich zumindest teilweise über ein Kommunikationsnetzwerk weiter an einen Fernrechner übermittelt werden.

Aus diesem Grunde lag dem Gegenstand die Aufgabe zugrunde, eine einfache und kostengünstige Möglichkeit zu schaffen, Messgerätezählerstände von Messgeräten kanalisiert erfassen zu können.

Diese Aufgabe wird gegenständlich durch eine Einrichtung nach Anspruch 1 und ein System nach Anspruch 8 gelöst.

Es ist erkannt worden, dass eine Adresskollision zwischen Daten die auf dem Messstellennetz ausgetauscht werden und Daten die innerhalb des nutzerseitigen Heimnetzes ausgetauscht werden, dadurch verhindert werden kann, dass die Steuereinrichtung die Kommunikation von dem Messstellennetz in das Heimnetz herein unterdrücken kann. Dies stellt sicher, dass ausgehenden von dem Messstellennetz kein Fremdzugriff auf das Heimnetz möglich ist. Zum einen wird durch die Unterdrückung der Kommunikation sichergestellt, dass bei Kollisionen im Adressbereich, z.B. gleiche IP Adressen, die Nachrichten nicht an den falschen Empfänger übermittelt werden. Zum anderen wird ein Abhören und Ausspionieren des Heimnetzes aus dem Messstellennetz heraus unmöglich.

Ein Heimnetz kann z.B. aus der Schnittstelleneinrichtung und einem PC gebildet sein. Hierbei besteht eine 1-zu-1 Kommunikationsverbindung zwischen der Schnittstelleneinrichtung und dem PC. Auch kann das Heimnetz ein lokales Datennetz sein, in welches mehrere Teilnehmer, z.B. PCs, Smartphones, Fernseher, Spielekonsolen, Router, Switches und dergleichen, eingebunden sein können.

In dem Fall, in dem ausgehend von der Messstellennetzschnittstelleneinrichtung eine Anfrage in das Messstellennetz gestellt wird, erfolgt eine Kommunikation von der ersten Schnittstelle zur zweiten Schnittstelle dann, wenn auf diese Anfrage in dem Messstellennetz eine Antwort vorliegt. So kann es möglich sein, beispielsweise eine Anfrage an ein in dem Messstellennetz angeordnetes oder an das Messstellennetz angeschlossenes Messgerät zu stellen. Diese Anfrage ist dabei mit einer eindeutigen ID gekennzeichnet. Liegt im Messstellennetz eine Antwort auf diese Anfrage vor, enthält diese Antwort ebenfalls diese eindeutige ID. Liegt eine Übereinstimmung zwischen der in der Schnittstelleneinrichtung/Steuereinrichtung gespeicherten ID der Anfrage und der ID in der Antwort vor, wird die Antwort von der ersten Schnittstelle durch die Steuereinrichtung zu der zweiten Schnittstelle geleitet. Andere Nachrichten und Informationen, die von dem Messstellennetz in der ersten Schnittstelle empfangen werden, können durch die Steuereinrichtung vor dem Heimnetz blockiert werden.

In Mehrfamilienhäusern kann ein eigenes Zähler-Netzwerk (zNet)1 aufgebaut werden. Ein solches Zähler-Netzwerk kann ein Drahtlosnetzwerk, beispielsweise WLAN, Bluetooth, ZigBee oder dergleichen sein. Auch ist es möglich, dass dieses Netz ein drahtgebundenes Netz ist und beispielsweise über Powerline Communication (PLC) Nachrichten austauscht. Auch ist es möglich, dass das Zähler-Netzwerk eine Breitbandverbindung innerhalb des Mehrfamilienhauses nutzt, beispielsweise ein Koaxialkabel, auf welchem Fernsehsignale übertragen werden. Auch in ein solches Kabel können die Nachrichten des Zähler-Netzwerks eingespeist werden. Der Vorteil der Verwendung eines koaxialen Fernsehsignal-Kabels liegt darin, dass dieses bereits häufig in Mehrfamilienhäusern verlegt ist und hierüber ein direkter Zugang in die Wohnungen der Nutzer möglich ist, ohne dass eine Kabelneuverlegung notwendig wird.

Bei der Verwendung eines Zähler-Netzwerks ist es möglich, dass ein MUC-C auf der einen Seite mit dem Zähler-Netzwerk verbunden ist und auf der anderen Seite mit einer Mehrzahl von elektronischen Haushaltszählern. Somit kann ein MUC-C Zählerstände von mehreren elektronischen Haushaltszählern abrufen. Diese Zählerstände können über das Zähler-Netzwerk an die Messstellennetzschnittstelleneinrichtungen übertragen werden. Insbesondere ist es möglich, dass die Messstellennetzschnittstelleneinrichtungen eine Anfrage zu einem Zählerstand eines bestimmten Zählers in das Zähler-Netzwerk einspeisen. Eine solche Anfrage kann beispielsweise eine Smart Message Language (SML) Nachricht sein. In der Anfrage ist die-ID z.B. des abzufragenden Zählers enthalten. Diese ID kann z.B. in der Steuereinrichtung gespeichert sein.

Diese Anfrage wird von dem MUC-C empfangen. Die ID des abzufragenden Zählers wird ermittelt und der Zählerstand des zu dieser Anfrage gehörenden elektronischen Haushaltszählers wird abgefragt oder aus einem Speicher im MUC-C geladen.

Daraufhin kann eine Antwort in das Zähler-Netzwerk, wiederum beispielsweise als SML Nachricht, eingespeist werden. Die anfragende Messstellennetzschnittstelleneinrichtung, bzw. die erste Schnittstelle oder die Steuereinrichtung, kann aus der Nachricht entnehmen, dass diese eine Antwort auf die vorherige Anfrage ist und gegebenenfalls an die zweite Schnittstelle weiterleiten. Dann ist die Antwort im Heimnetz des Nutzers verfügbar und der Nutzer kann über sein Heimnetz den Zählerstand zur Verfügung gestellt bekommen.

Der Aufbau des Zähler-Netzwerks und die Kommunikation zwischen dem MUC-C und den Messstellennetzschnittstelleneinrichtungen kann als selbstorganisierendes Netz gestaltet sein. Hierbei ist es möglich, dass der MUC-C und die Messstellennetzschnittstelleneinrichtungen Übertragungsprotokolle austauschen und insbesondere auch Schlüssel austauschen, um die Übertragung zu verschlüsseln. Das Z-Netz kann als ad-hoc Netz selbst organisierend sein und neue Messstellennetzschnittstelleneinrichtungen integrieren. Hierbei können von der Messstellennetzschnittstelleneinrichtungen Routing als auch NAT Funktionen übernommen werden, um das Zähler-Netzwerk einzurichten.

Das Zähler-Netzwerk ist vorzugsweise logisch von den Heimnetzen getrennt. Diese logische Trennung erfolgt durch die Steuereinrichtung. Dadurch ist es möglich, dass der im Zähler-Netzwerk verwendete Adressraum zur Adressierung der Messstellennetzschnittstelleneinrichtungen und der MUC-Cs völlig unabhängig von dem Adressraum der jeweils angeschlossenen Heimnetze ist.

Gemäß einem vorteilhaften Ausführungsbeispiel wird vorgeschlagen, dass die erste Schnittstelle und/oder die Steuereinrichtung eine Repeaterfunktion für das Messstellennetz aufweist. Das Messstellennetz kann über lange Signalwege verfügen. Bei großen Häusern können mehrere dutzend Messstellennetzschnittstelleneinrichtungen an das Messstellennetz angeschlossen sein. Um sicherzustellen, dass alle Nachrichten auf dem Messstellennetz auch von allen Messstellennetzschnittstelleneinrichtungen und den angeschlossenen MUC-Cs empfangen werden können, wird die Repeaterfunktion vorgeschlagen. Mit Hilfe dieser ist es möglich, dass jede einzelne Messstellennetzschnittstelleneinrichtung die empfangenen Signale verstärkt und erneut auf dem Messstellennetz verteilt.

Gemäß einem vorteilhaften Ausführungsbeispiel wird vorgeschlagen, dass die Messstellennetzschnittstelleneinrichtung eine Funkschnittstelle zum Empfang von Messwerten von Messgeräten aufweist. In Mehrfamilienhäusern kommt es häufig vor, dass der elektronische Haushaltszähler im Keller angeordnet oder zumindest außerhalb der Wohnung des Nutzers ist. Andere Messeinrichtungen und Sensoren, wie beispielsweise Gas- und Wasserzähler sind dagegen in der Wohnung des Nutzers, zumindest jedoch räumlich von dem elektronischen Haushaltszähler getrennt, angeordnet, so dass diese außerhalb der Übertragungsreichweite und dem direkten Zugriff des MUC-Cs sind. Dennoch sollen auch solche Messsignale über den MUC-C an den Energielieferanten übertragbar sein.

Hierfür sind die Sensoren und Messeinrichtungen häufig mit Mitteln zur Funkübertragung ausgestattet, insbesondere mit WMbus fähigen Transceivern. Auch können die Sensoren mittels Zigbee oder anderer Protokolle die Messdaten versenden. Auch ist eine drahtgebundene Kommunikation, z.B. mittels mit Mbus fähigen Transceivern oder über USB Kabel, möglich.

Diese Mittel zur (Funk-)übertragung senden die Messwerte der Sensoren und Messgeräte aus, so dass diese von MUC-Cs empfangen werden können. Sind die MUC-Cs jedoch außerhalb der Wohnung des Nutzers, kann es zu Übertragungsstörungen kommen. Um diesen zu begegnen, wird vorgeschlagen, dass die Messstellennetzschnittstelleneinrichtungen (Funk-)schnittstellen, die zum Empfang der Messwerte, insbesondere über ein W-Mbus oder Zigbee, geeignet sind, aufweisen.

Die von den Messstellennetzschnittstelleneinrichtungen empfangenen Messwerte von den weiteren Sensoren können dann mittels der Steuereinrichtung an die erste Schnittstelle weitergeleitet und dann in das Messstellennetz, z.B. als SML Nachrichten, eingespeist werden. Die an dem Messstellennetz angeschlossenen MUC-Cs können somit auch Messwerte empfangen, die von Messgeräten ermittelt wurden, die räumlich von den MUC-Cs entfernt sind. Die empfangenden MUC-Cs können die empfangenen Daten für das Versenden an den Energiedienstleister aufbereiten und anschließend über ein Weitverkehrsnetz an den Energiedienstleister senden.

Aus diesem Grunde wird auch vorgeschlagen, dass eine Steuereinrichtung die über die (Funk-)schnittstelle empfangenen Messwerte über die erste Schnittstelle in das Messstellennetz speist.

Auch ist es möglich, dass mittels der (Funk-)schnittstelle und/oder der ersten Schnittstelle Steuerbefehle an die Sensoren und/oder Aktoren übermittelt und/oder weitergeleitet werden.

Gemäß einem vorteilhaften Ausführungsbeispiel wird auch vorgeschlagen, dass die Steuereinrichtung als Firewall zwischen erster und zweiter Schnittstelle eingerichtet ist. In diesem Fall dient die Steuereinrichtung dazu, Kommunikation zwischen der ersten und der zweiten Schnittstelle zu filtern, so dass Zugriffe auf das nutzerseitige Heimnetz von dem Messstellennetz aus nur autorisiert möglich sind. Insbesondere können beispielweise nur solche Datenpakete an die zweite Schnittstelle weitergeleitet werden, die als Antwort auf eine Anfrage der Messstellennetzschnittstelleneinrichtung in das Messstellennetz vorliegen. Auch können z.B. SML Broadcast Nachrichten innerhalb des Messstellennetzes geblockt werden.

Um ein selbstorganisierendes Netz zu ermöglichen, wird vorgeschlagen, dass die Steuereinrichtung als DHCP-Server und/oder als DHCP-Client ausgestaltet ist. Somit können die Steuereinrichtungen die Adressvergabe in dem Messstellennetz selbstorganisierend übernehmen und dafür sorgen, dass die Kommunikation zwischen den Messstellennetzschnittstelleneinrichtung kollisionsfrei abläuft. Insbesondere kann die DHCP Server Funktionalität automatisch ausgeschaltet werden, sobald die Steuereinrichtungen einen DHCP Server im Messstellennetz erkennen. Für den Fall, dass kein DHCP Server im Netz erkannt wird oder alle erkannten DHCP Server im Messstellennetz ausfallen, kann die DHCP Server Funktionalität automatisch wieder aktiviert werden. Dies führt dazu, dass ohne Nutzereingriff im Messstellennetz immer genau ein DHCP arbeitet und den Adressraum im Messstellennetz verwaltet. Eine Konfiguration durch den Nutzer ist nicht erforderlich.

Auch wird vorgeschlagen, dass Nutzer über die Messstellennetzschnittstelleneinrichtung Mehrwertdienste nutzen können, um nicht nur Zählerstände ablesen zu können, sondern beispielsweise auch Tarifinformationen und weitere Informationen. Aus diesem Grunde wird vorgeschlagen, dass die Steuereinrichtung als Webserver und/oder als Applikationsserver eingerichtet ist. Somit ist es möglich, dass über den Internetzugang des Nutzers und des Heimnetz die Steuereinrichtung Applikationen lädt und diese dem Benutzer über das Heimnetz zur Verfügung stellt. Solche Applikationen können zum Einen Kommunikationsapplikationen sein, mit denen der Energiedienstleister mit den Kunden kommunizieren kann, als auch Mehrwertapplikationen, mit denen der Kunde beispielsweise Tarifinformationen erhalten und einstellen kann, Spezialtarife buchen kann oder dergleichen. Hierbei kann insbesondere der Internet-Browser des Nutzers zum Einsatz kommen, der über das Heimnetz auf die Steuereinrichtung bzw. den dort ausgeführten Web-Server oder Applikationsserver zugreift. Auch ist es möglich, verschiedene Kommunikationsprotokolle, mit denen Sensoren, wie oben beschrieben, Messwerte an die (Funk-)schnittstelle der Messstellennetzschnittstelleneinrichtung übertragen, mittels Applikation auf die Messstellennetzschnittstelleneinrichtung zu laden. Dann ist es möglich, Sensoren von verschiedenen Herstellern und mit verschiedenartigen Protokollen mit nur einer Messstellennetzschnittstelleneinrichtung zu empfangen und an den MUC-C über das Messstellennetz zu übertragen.

Wie bereits zuvor erläutert, muss die Kommunikation von dem Messstellennetz in das Heimnetz gesichert sein. Aus diesem Grunde wird vorgeschlagen, dass die Kommunikation zwischen dem Heimnetz und dem Messstellennetz ausschließlich von der zweiten Schnittstelle auslösbar ist.

Gegenständlich werden nur solche Nachrichten von dem Messstellennetz in das Heimnetz geleitet werden, welche als Antwort auf eine von der zweiten Schnittstelle ausgelöste und durch die erste Schnittstelle in das Messstellennetz eingespeiste Anfrage in dem Messstellennetz vorliegen.

Anfragen von der ersten Schnittstelle in das Messstellennetz sind mit einer eindeutigen ID versehen und Antworten auf solche Anfragen enthalten ebenfalls diese ID. Die Steuereinrichtung kann dann überprüfen, ob Nachrichten auf dem Messstellennetz die entsprechende ID enthalten und nur solche Nachrichten an die zweite Schnittstelle weiterleiten, die eine ID enthalten, die identisch zu einer ID ist, mit der eine Anfrage in das Messstellennetz gespeist wurde.

Um den Kunden die Information über den Zählerstand möglichst komfortabel zu präsentieren, wird auch vorgeschlagen, dass das Heimnetz ein Bild- oder Fernsehübertragungsnetz des Nutzers ist und das von der ersten Schnittstelle empfangene Informationen über die zweite Schnittstelle als visuelle Information in das Heimnetz eingespeist werden. Das Heimnetz kann auch ein TCP/IP Netz zur Übertragung von Bild- oder Fernsehsignalen sein.

Der Begriff Fernseher wird als Synonym für jegliche Anzeigevorrichtung verstanden, mit deren Hilfe visuelle Informationen angezeigt werden können.

So kann beispielsweise ein Fernsehanschluss und ein Fernseher des Nutzers dazu genutzt werden, die Messdaten anzuzeigen. Hierzu kann die zweite Schnittstelle geeignete Bildsignale in das Fernsehnetz einspeisen und der Benutzer kann diese Bildsignale beispielsweise über eine gesonderte Frequenz auf seinem Fernseher empfangen. Hierbei kann unter Umständen eine Koppeleinrichtung vorgesehen sein, die verhindert, dass die HF Signale der zweiten Schnittstelle so in das Kabelnetz eingespeist werden dass diese außerhalb der Umgebung des Nutzers Dritten zugänglich gemacht werden können.

Auch können die Bilddaten mittels Streaming in das Heimnetz eingespeist werden. So können diese Daten z.B. mittels geeigneter Protokolle wie DLNA oder UPNP in das Heimnetz eingespeist werden.

Um neben dem aktuellen Zählerstand weitere Informationen über den Fernseher verfügbar zu machen, wird auch vorgeschlagen, dass Informationen zu den Messdaten mittels eines Videotextencoders in einzelnen Seiten codiert werden. Diese Informationen werden dann als Videotextsignal in das Fernsehsignal eingespeist. Über hierfür vorgesehene Videotextseiten können die Nutzer dann die Informationen abrufen. Solche Informationen können neben dem aktuellen Zählerstand auch Tages-, Wochen-, Monats- und Jahresganglinien sein. Auch können Tarifinformationen und dergleichen als Videotextseiten eingespeist und verfügbar gemacht werden.

Der Videotextencoder kann über eine geeignete Schnittstelle parametriert werden. Hierdurch können die Videotextseiten konfiguriert werden, die angezeigt werden sollen. Die Parametrierung kann lokal, z.B. über einen PC erfolgen oder z.B. mittels USB Stick oder Smartcard in den Videotextencoder eingespeist werden.

Auch ist es möglich, die Informationen mittels einer gesonderten AV Verbindung mit dem Fernseher an den Fernseher zu übertragen. Eine AV Verbindung hat den Vorteil, dass ein Einspeisen der Informationen in das Fernsehnetz vermieden wird. Eine AV Verbindung kann z.B. mittels HDMI realisiert werden. Über HDMI ist dann ein Rückkanal steuerbar, mit dessen Hilfe von dem Fernsehgerät aus Steuerinformationen an die Messstellennetzschnittstelleneinrichtung übertragen werden können.

So kann z.B. mittels des Consumer Electronics Control Standards (CEC) ein Rückkanal realisiert werden. Über diesen Rückkanal können zum Einen die Informationen ausgewählt werden, die zur Anzeige gebracht werden sollen oder zum Anderen auch die Parametrierung der Anzeige erfolgen. Auch kann eingestellt werden, welche Informationen über das Messstellennetz abgerufen werden und ggf. auch in welchen zeitlichen Abständen die Informationen abgerufen werden. Der CEC Standard definiert Funktionen des Rückkanals. Mittels geeigneter Parametrierung, z.B. über einen PC oder eine Smartcard, können den CEC Funktionen für die Messstellennetzschnittstelleneinrichtung angepasste Funktionen zugeordnet werden.

Auch kann es möglich sein, dass die Messwerte auf digitalen Bildrahmen, die eine Funkschnittstelle aufweisen, empfangbar sind. So kann die zweite Schnittstelle beispielsweise Bildsignale übertragen, die den Messwert repräsentieren. Die entsprechenden Bilder können auf einem digitalen Bilderrahmen in der Wohnung des Nutzers angezeigt werden. Hierbei ist eine verschlüsselte Übertragung der Informationen zwischen Bilderrahmen und zweiter Schnittstelle vorteilhaft, da ansonsten die Messwerte von Dritten ebenfalls empfangen werden könnten.

Auch ist es möglich, dass das nutzerseitige Heimnetz ein Heimautomatisierungsbus ist. Insbesondere ist hier der EIB/KNX Bus zu nennen. Auf entsprechenden Anzeigegeräten eines solchen Heimautomatisierungsbusses kann ebenfalls eine Anzeige der Messwerte erfolgen. Aus diesem Grunde kann die zweite Schnittstelle zum Anschluss an einem Heimautomatisierungsbus ausgelegt sein.

Ein weiterer Aspekt ist ein System mit einer ersten Messstellennetzschnittstelleneinrichtung, wie sie zuvor beschrieben ist, einem Messstellennetz und einer zweiten Messstellennetzschnittstelleneinrichtung mit einer ersten Schnittstelle eingerichtet zur Kommunikation mit dem Messstellennetz und einer zweiten Schnittstelle eingerichtet zur Kommunikation mit einem Stromzähler. Wie bereits zuvor erläutert, kann die zweite Messstellennetzschnittstelleneinrichtung dazu ausgelegt sein, mit dem Messstellennetz auf der einen Seite und einem MUC-C auf der anderen Seite zu kommunizieren. Mit Hilfe dieser zweiten Messstellennetzschnittstelleneinrichtung ist es möglich, eine Kommunikation zwischen Heimnetzen und MUC-Cs aufzubauen, um über ein Messstellennetz Messwerte von einem Messgerät an einen Kunden zu übertragen.

Die zweite Messtellennetzschnittstelleneinrichtung kann z.B. mittels TCP/IP eine Kommunikation über das Heimnetz aufbauen.

Auch wird vorgeschlagen, dass die zweite Schnittstelle der zweiten Messstellennetzschnittstelleneinrichtung zur Kommunikation mit einer I3 Schnittstelle eines MUC-C eingerichtet ist.

Die zuvor genannten Verfahren können auch als Computerprogramm oder als auf einem Speichermedium gespeichertes Computerprogramm realisiert werden. Die Merkmale der Verfahren und Vorrichtungen sind frei miteinander kombinierbar. Insbesondere können Merkmale der abhängigen Ansprüche unter Umgehung der Merkmale der unabhängigen Ansprüche in Alleinstellung oder frei miteinander kombiniert eigenständig erfinderisch sein.

Nachfolgend wird der Gegenstand anhand einer Ausführungsbeispiele zeigenden Zeichnung näher erläutert. In der Zeichnung zeigen:
- Fig. 1: eine schematische Ansicht einer Messstellennetzschnittstelleneinrichtung in einem Heimnetz;
- Fig. 2: einen schematischen Aufbau eines Systems mit mehreren Messstellennetzschnittstelleneinrichtungen.

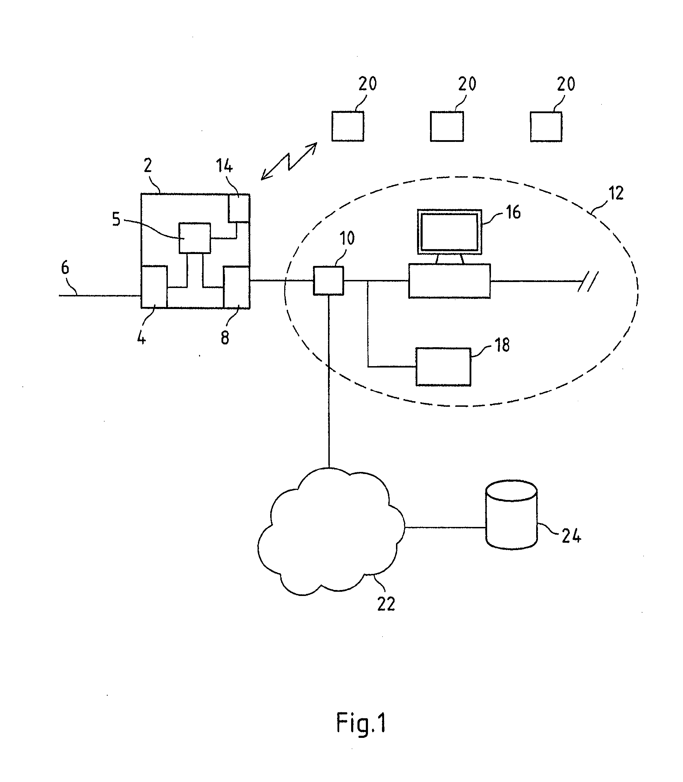

Fig. 1 zeigt eine Messstellennetzschnittstelleneinrichtung 2 mit einer ersten Schnittstelle 4. Die erste Schnittstelle 4 ist zur Kommunikation mit einem Messstellennetz 6 ausgelegt.

Die Messstellennetzschnittstelleneinrichtung 2 weist eine zweite Schnittstelle 8 auf, die dazu ausgelegt ist, mit einem an einen Router 10 angeschlossenen Heimnetz 12 zu kommunizieren. Ferner weist die Messstellennetzschnittstelleneinrichtung 2 eine Funkschnittstelle 14 auf. In dem Heimnetz 12 können beispielsweise Computer 16 als auch andere Geräte 18 angeschlossen sein und über den Router 10 miteinander und mit der Messstellennetzschnittstelleneinrichtung 2 kommunizieren.

Das Heimnetz 12 ist vorzugsweise ein TCP/IP basiertes Netz.

Über den Computer 16 oder das zweite Gerät 18 kann der Kunde beispielsweise den Zählerstand seines elektronischen Haushaltszählers abfragen. Hierzu wird eine entsprechende Anfrage über den Router 10 in die zweite Schnittstelle 8 der Messstellennetzschnittstelleneinrichtung 2 geleitet. Diese Anfrage wird durch eine in der Messstellennetzschnittstelleneinrichtung 2 angeordnete Steuereinrichtung 5 empfangen und mit einer eindeutigen ID versehen. Daraufhin wird die Anfrage von der Steuereinrichtung 5 an die erste Schnittstelle 4 weitergeleitet und die erste Schnittstelle 4 wandelt die Anfrage in ein für das Messstellennetz 6 geeignetes Format um und speist die Anfrage in das Messstellennetz 6 ein.

Dann wartet die Steuereinrichtung 5 auf eine Rückantwort des Messstellennetzes 6 über die erste Schnittstelle 4. Im Fall einer Nachricht auf dem Messstellennetz 6 wird diese Nachricht von der ersten Schnittstelle 4 empfangen und an die Steuereinrichtung 5 weitergeleitet. Die Steuereinrichtung 5 überprüft, ob die empfangene Nachricht zu der von der Steuereinrichtung 5 ausgesandten Anfrage stammt. Ist dies nicht der Fall, so wird die Nachricht verworfen und ein Weiterleiten zur zweiten Schnittstelle 8 entfällt. Anderenfalls, d.h. wenn die Nachricht auf eine Anfrage empfangen wurde, stimmen die ID der Anfrage und der Nachricht überein und die Steuereinrichtung 5 kann die Nachricht an die zweite Schnittstelle 8 weiterleiten, woraufhin diese die Antwort in ein für das Heimnetz 12 geeignetes Format umwandelt und über den Router 10 in das Heimnetz 12 einspeist. In dem Computer 16 kann dann der Inhalt der Nachricht visualisiert werden, insbesondere kann der Inhalt der Nachricht ein Messzählerstand des eHz des Nutzers sein.

Die Steuereinrichtung 5 ist so gestaltet, dass die Kommunikation zwischen der ersten Schnittstelle 4 und der zweiten Schnittstelle 8 derart gefiltert ist, dass eine Kommunikation von dem Messstellennetz 6 in das Heimnetz 12 unterdrückbar ist, um das Heimnetz 12 vor Fremdzugriffen zu schützen.

In der Wohnung des Nutzers können weitere Messgeräte 20 vorhanden sein. Dies können beispielsweise Gas- und Wasserzähler sein. Diese Messgeräte 20 können beispielsweise ebenfalls über eine Funkschnittstelle verfügen und beispielsweise mit Hilfe des W-Mbus Protokolls Zählerstände an die Funkschnittstelle 14 übermitteln. Empfangene Zählerstände werden von der Funkschnittstelle 14 an die Steuereinrichtung 5 übergeben. In der Steuereinrichtung 5 können diese Messwerte dann zur Übertragung an das Messstellennetz 6 an die erste Schnittstelle 4 weitergeleitet werden und die erste Schnittstelle 4 sendet die Messwerte in das Messstellennetz 6. In dem Messstellennetz 6 können entsprechende Empfänger vorgesehen sein, z.B. MUC-Cs, die die Messwerte entgegennehmen und über eine Weitverkehrsschnittstelle an den Energielieferanten weiterleiten, der die Messwerte dann zu Abrechnungszwecke verwenden kann. Es versteht sich, dass die Messdaten der genannten Messgeräte nur beispielhaft sind und Messwerte verschiedenster Messgeräte in der beschriebenen Art und Weise den MUC-Cs und den Energielieferanten oder sonstigen Lieferanten zur Verfügung gestellt werden können.

Über den Router 10 ist das Heimnetz 12 mit dem Internet 22 verbunden. Über das Internet 22 ist beispielsweise eine Verbindung mit einer Datenbank 24 eines Messstellenbetreibers möglich. Von dieser Datenbank kann die Steuereinrichtung 5 beispielsweise Webapplikationen, RSS Feeds, Applikationen oder dergleichen laden. Die geladenen Applikationen, RSS Feeds und Webanwendungen können dann mit Hilfe der Steuereinrichtung 5 und dem Computer 16 den Nutzer zur Verfügung gestellt werden. Auch können die Applikationen dazu genutzt werden, die Funkschnittstelle 14 und/oder die Steuereinrichtung 5 so zu programmieren, dass diese verschiedene Protokolle beherrschen, um mit verschiedenen Sensoren 20 zu kommunizieren. Die Funkschnittstelle 14 und/oder die Steuereinrichtung 5 kann somit mittels einer Applikation dazu in die Lage versetzt werden, über ein geeignetes Protokoll, welches ggf. zuvor nicht in der Funkschnittstelle 14 und/oder der Steuereinrichtung 5 vorhanden war, mit den Sensoren 20 zu kommunizieren.

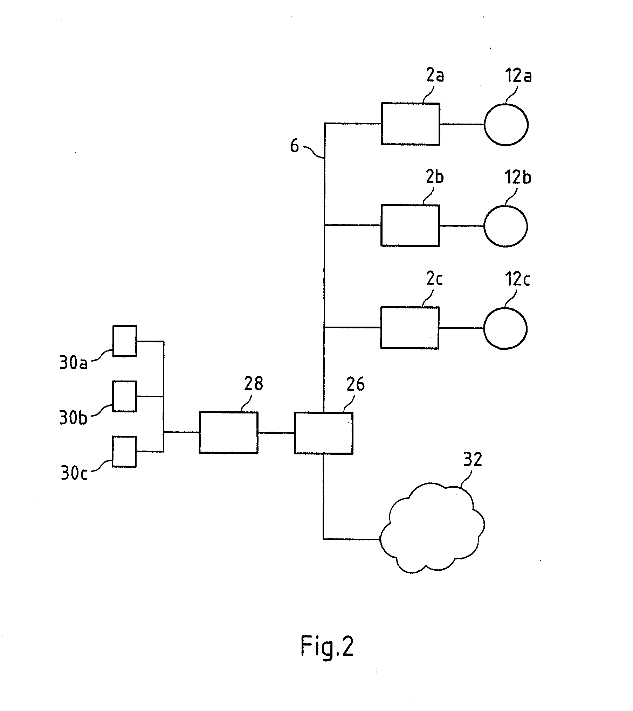

Fig. 2 zeigt ein beispielhaftes System eines Messstellennetzes 6. Zu erkennen ist, dass an dem Messstellennetz 6 drei Messstellennetzschnittstelleneinrichtungen 2a-c angeschlossen sind. An diesen Messstellennetzschnittstelleneinrichtungen 2a-c sind jeweilige Heimnetze 12a-c angeschlossen.

Eine weitere Messstellennetzschnittstelleneinrichtung 26 ist ebenfalls in dem Messstellennetz 6 angeschlossen, welche eine Schnittstelle zu dem Messstellennetz 6, eine Schnittstelle zu einem MUC-C 28 und eine Schnittstelle zu einem Weitverkehrsnetz 32 aufweist.

An dem MUC-C 28 können mehrere elektronische Haushaltszähler 30a-c angeschlossen sein. Der elektronische Haushaltszähler 30a kann beispielsweise die elektrische Energie messen, welche von dem Nutzer des Heimnetzes 12a bezogen wird. Gleiches gilt für den elektronischen Haushaltszähler 30b und das Heimnetz 12b als auch den elektronischen Haushaltszähler 30c und das Heimnetz 12c.

Ein Nutzer des Heimnetzes 12a kann beispielsweise über die Messstellennetzschnittstelleneinrichtung 2a eine Anfrage über den aktuellen Zählerstand aussenden. Diese Anfrage wird über das Messstellennetz 6 an die Messstellennetzschnittstelleneinrichtung 26 weitergeleitet.

Diese überträgt die Anfrage dann z.B. über die I3 Schnittstelle des MUC-C 28. Der MUC-C 28 ermittelt den aktuellen Zählerstand des elektronischen Haushaltszählers 30a, der entweder in dem MUC-C gespeichert ist oder aktuell von dem elektronischen Haushaltszähler 30a abgefragt wird. Die Messstellennetzschnittstelleneinrichtung 26 kann auch Bestandteil des MUC-Cs 28 sein und kann dabei in den MUC-C 28 integriert sein.

Der aktuelle Zählerstand wird dann erneut über die I3 Schnittstelle des MUC-Cs 28 an die Messstellennetzschnittstelleneinrichtung 26 weitergeleitet, welche die entsprechende Nachricht auf das Messstellennetz 6 gibt.

Die Messstellennetzschnittstelleneinrichtung 2a empfängt diese Nachricht und ermittelt anhand einer in der Nachricht enthaltenen ID, ob die Nachricht für die Messstellennetzschnittstelleneinrichtung 2a bestimmt ist. Ist dies der Fall, so wird der in der Nachricht enthaltene Messwert dem Heimnetz 12a für eine Visualisierung zur Verfügung gestellt.

Da die Abstände zwischen den Messstellennetzschnittstelleneinrichtungen 2a, b und c sowie der Messstellennetzschnittstelleneinrichtung 26 groß sein können, kann jede einzelne der Messstellennetzschnittstelleneinrichtung 2a-c, 26 Repeaterfunktionen übernehmen und die auf dem Messstellenwert 6 empfangene Nachricht verstärkt weiterleiten. Somit wird sichergestellt, dass auch bei großer räumlicher Ausdehnung des Messstellennetzes 6 die Nachrichten stets von allen angeschlossenen Geräten empfangen werden können.

Ein Messstellennetzbetreiber kann über das Weitverkehrsnetz 32 Zählerstände von den elektronischen Haushaltszählern 30a-c abfragen, indem er über die Weitverkehrsnetzschnittstelle der Messstellennetzschnittstelleneinrichtung 26 den MUC-C 28 abfragt.

In dem MUC-C 28 können neben den Zählerständen von den elektronischen Haushaltszählern 30a-c auch Zählerstände von weiteren Messgeräten/Sensoren 20 gespeichert sein, die beispielsweise in den Nutzerwohnungen angeordnet sind. Wie zuvor beschrieben, können diese Zählerstände z.B. über den W-Mbus und die Messstellennetzschnittstelleneinrichtung 2a-c an den MUC-C 28 übertragen werden und sind dann zum Abrufen durch den Energielieferanten über das Weitverkehrsnetz 32 vorgehalten.

Mit Hilfe der gegenständlichen Messstellennetzschnittstelleneinrichtung 2, 26 ist es möglich, Messstellennetze sicher zu betreiben und den administrativen Aufwand möglichst gering zu halten.

## Patentansprüche

1. Messstellennetzschnittstelleneinrichtung mit
- einer ersten Schnittstelle (4) eingerichtet zur Kommunikation mit einem eine Mehrzahl von jeweils eindeutigen IDs aufweisenden Energiemessstellen (30) verbindenden Messstellennetz (6),
- einer zweiten Schnittstelle (8) eingerichtet zur Kommunikation mit einem nutzerseitigen Heimnetz (12), **dadurch gekennzeichnet, dass**
- eine Steuereinrichtung (5) zur Steuerung der Kommunikation zwischen den beiden Schnittstellen (4, 8) angeordnet ist derart, dass die Messstellennetzschnittstelleneinrichtung eine mit der ID einer Energiemessstelle (30) gekennzeichnete, von der zweiten Schnittstelle ausgelöste und durch die erste Schnittstelle in das Messstellennetz eingespeiste Anfrage an eine in dem Messstellennetz (6) angeordnete oder an das Messstellennetz (6) angeschlossene Energiemessstelle (30) über das Messstellennetz (6) stellt, und dass die Steuereinrichtung (5) eine Antwort aus dem Messstellennetz (6) von der ersten Schnittstelle (4) zur zweiten Schnittstelle (8) dann weiterleitet, wenn eine Übereinstimmung zwischen der ID der Anfrage und der ID der Antwort vorliegt.

2. Messstellennetzschnittstelleneinrichtung nach Anspruch 1, dadurch **gekennzeichnet,** dass die erste Schnittstelle (4) und/oder die Steuereinrichtung (5) eine Repeaterfunktion für das Messstellennetz (6) aufweist.

3. Messstellennetzschnittstelleneinrichtung nach einem der vorangehenden Ansprüche, **dadurch gekennzeichnet, dass** die Messstellennetzschnittstelleneinrichtung (2) eine Schnittstelle (14), vorzugsweise eine Funkschnittstelle, vorzugsweise nach dem Wireless WM-Bus oder dem Zigbee Standard, zum Empfang von Messwerten von Messgeräten (20) aufweist.

4. Messstellennetzschnittstelleneinrichtung nach Anspruch 3, **dadurch gekennzeichnet, dass** die Steuereinrichtung (5) die über die Schnittstelle (14) empfangenen Messwerte über die erste Schnittstelle (4) in das Messstellennetz (6) speist.

5. Messstellennetzschnittstelleneinrichtung nach einem der vorangehenden Ansprüche, **dadurch gekennzeichnet, dass** die Steuereinrichtung (5) als Firewall zwischen erster (4) und zweiter Schnittstelle (8), als DHCP-Server/Client für das Messstellennetz (6), als Web-Server und/oder als Applikationsserver eingerichtet ist.

6. Messstellennetzschnittstelleneinrichtung nach einem der vorangehenden Ansprüche, **dadurch gekennzeichnet, dass** die Kommunikation zwischen dem Heimnetz (12) und dem Messstellennetz (6) ausschließlich von der zweiten Schnittstelle (8) auslösbar ist.

7. Messstellennetzschnittstelleneinrichtung nach einem der vorangehenden Ansprüche, **dadurch gekennzeichnet, dass** das Heimnetz (12) ein Bild- oder Fernsehübertragungsnetz des Nutzers ist und dass von der ersten Schnittstelle (4)
empfangene Informationen über die zweite Schnittstelle (8) als visuelle Informationen in das Heimnetz (12) eingespeist werden, oder dass das nutzerseitige Heimnetz (12) ein Heimautomatisierungsbus ist und dass von der ersten Schnittstelle (4) empfangene Informationen über die zweite Schnittstelle (8) als Heimautomatisierungsbusdaten in das Heimnetz (12) eingespeist werden.

8. System mit einer ersten Messstellennetzschnittstelleneinrichtung (2) nach Anspruch 1, einem Messstellennetz (6) und einer zweiten Messstellennetzschnittstelleneinrichtung (26) mit einer ersten Schnittstelle eingerichtet zur Kommunikation mit dem Messstellennetz (6) und einer zweiten Schnittstelle eingerichtet zur Kommunikation mit einem Stromzähler (30).

9. System nach Anspruch 8, dadurch **gekennzeichnet,** dass die zweite Schnittstelle der zweiten Messstellennetzschnittstelleneinrichtung zur Kommunikation mit einer Schnittstelle, vorzugsweise der 13-Schnittstelle, eines Multi Utility Communication Controllers, MUC-C, (28) eingerichtet ist.

10. System nach Anspruch 9 oder 10, **dadurch gekennzeichnet, dass** eine Weitverkehrsschnittstelleneinrichtung mit einer ersten Schnittstelle eingerichtet zur Kommunikation mit dem Messstellennetz (6) und einer zweiten Schnittstelle eingerichtet zur Kommunikation mit einem Weiteverkehrsnetz (32) vorgesehen ist.

## Claims

1. A monitoring network interface device having
- a first interface (4) designed for communication with a monitoring network (6) that connects a plurality of energy measuring stations (30), which each have unique IDs,
- a second interface (8) designed for communication with a user-side home network (12), **characterised in that**
- a control device (5) for controlling the communication between the two interfaces (4, 8) is arranged in such a manner that the monitoring network interface device sends a request, which is identified with the ID of an energy measuring station (30), triggered by the second interface and fed into the monitoring network via the first interface, to an energy measuring station (30), which is arranged in the monitoring network (6) or connected to the monitoring network (6), via the monitoring network (6), and that the control device (5) then forwards a response from the monitoring network (6) from the first interface (4) to the second interface (8) if the ID of the request and the ID of the response match.

2. Monitoring network interface device according to Claim 1, **characterised in that** the first interface (4) and/or the control device (5) has a repeater function for the monitoring network (6).

3. Monitoring network interface device according to any one of the preceding claims, **characterised in that** the monitoring network interface device (2) has an interface (14), preferably a radio interface, preferably to wireless M-Bus or ZigBee standard, for receiving measured values from measuring units (20).

4. Monitoring network interface device according to Claim 3, **characterised in that** the control device (5) feeds the measured values that are received via the interface (14) into the monitoring network (6) via the first interface (4).

5. Monitoring network interface device according to any one of the preceding claims, **characterised in that** the control device (5) is designed as a firewall between the first (4) and second (8) interfaces, as a DHCP server/client for the monitoring network (6), as a web server and/or as an application server.

6. Monitoring network interface device according to any one of the preceding claims, **characterised in that** communication between the home network (12) and the monitoring network (6) can only be triggered by the second interface (8).

7. Monitoring network interface device according to any one of the preceding claims, **characterised in that** the home network (12) is an image or television transmission network of the user and that information received by the first interface (4) is fed into the home network (12) via the second interface (8) as visual information, or that the user-side home network (12) is a home automation bus and that information received by the first interface (4) is fed into the home network (12) via the second interface (8) as home automation bus data.

8. A system having a first monitoring network interface device (2) according to Claim 1, a monitoring network (6) and a second monitoring network interface device (26) with a first interface designed for communication with the monitoring network (6) and a second interface designed for communication with an current meter (30).

9. System according to Claim 8, **characterised in that** the second interface of the second monitoring network interface device is designed for communication with an interface, preferably the I3 interface, of a multi-utility communication controller, MUC-C, (28).

10. System according to Claim 9 or 10, **characterised in that** a wide-area interface device is provided, having a first interface designed for communication with the monitoring network (6) and a second interface designed for communication with a wide-area network (32).

## Revendications

1. Dispositif d'interface pour un réseau de points de mesure comprenant
- une première interface (4) agencée pour la communication avec un réseau de points de mesure (6) reliant une pluralité de points de mesure d'énergie (30) présentant à chaque fois des identifications - ou ID - sans équivoque,
- une seconde interface (8) agencée pour la communication avec un réseau domestique (12), côté usager,
caractérisé
en ce qu'un dispositif de commande (5) servant à la commande de la communication entre les deux interfaces (4, 8) est disposé de manière telle, que le dispositif d'interface pour un réseau de points de mesure fasse, via le réseau de points de mesure (6), une demande **caractérisée** avec l'identification d'un point de mesure d'énergie (30), demande qui est déclenchée par la seconde interface et stockée en mémoire dans le réseau de points de mesure, par la première interface, ladite demande étant adressée à un point de mesure d'énergie (30) disposé dans le réseau de points de mesure (6) ou bien raccordé au réseau de points de mesure (6),
et en ce que le dispositif de commande (5) transmet ensuite une réponse provenant du réseau de points de mesure (6) et passant de la première interface (4) à la seconde interface (8), quand il y a une conformité entre l'identification de la demande et l'identification de la réponse.

2. Dispositif d'interface pour un réseau de points de mesure selon la revendication 1, **caractérisé en ce que** la première interface (4) et/ou le dispositif de commande (5) présente une fonction répéteur pour le réseau de points de mesure (6).

3. Dispositif d'interface pour un réseau de points de mesure selon l'une ou l'autre des revendications précédentes, **caractérisé en ce que** le dispositif d'interface (2) pour un réseau de points de mesure présente une interface (14), de préférence une interface radio, de préférence selon le module WM-bus sans fil ou selon la norme Zigbee, servant à la réception de valeurs mesurées provenant d'appareils de mesure (20).

4. Dispositif d'interface pour un réseau de points de mesure selon la revendication 3, **caractérisé en ce que** le dispositif de commande (5) stocke en mémoire dans le réseau de points de mesure (6), par la première interface (4), les valeurs mesurées reçues par l'interface (14).

5. Dispositif d'interface pour un réseau de points de mesure selon l'une quelconque des revendications précédentes, **caractérisé en ce que** le dispositif de commande (5) est agencé comme pare-feu entre la première (4) et la seconde (8) interfaces, comme client DHCP / serveur DHCP pour le réseau de points de mesure (6), comme serveur Web et/ou comme serveur d'applications.

6. Dispositif d'interface pour un réseau de points de mesure selon l'une quelconque des revendications précédentes, **caractérisé en ce que** la communication entre le réseau domestique (12) et le réseau de points de mesuré (6) peut être déclenchée exclusivement par la seconde interface (8).

7. Dispositif d'interface pour un réseau de points de mesure selon l'une quelconque des revendications précédentes, **caractérisé en ce que** le réseau domestique (12) est un réseau de diffusion d'images ou un réseau de diffusion télévisuelle de l'usager, et **en ce que** des informations reçues en provenance de la première interface (4) sont stockées en mémoire dans le réseau domestique (12) comme informations visuelles, par la seconde interface (8), ou bien **en ce que** le réseau domestique (12), côté usager, est un bus d'automatisation domestique, et **en ce que** des informations reçues en provenance de la première interface (4) sont stockées en mémoire dans le réseau domestique (12) comme des données de bus d'automatisation domestique, par la seconde interface (8).

8. Système comprenant un premier dispositif d'interface (2) pour un réseau de points de mesure selon la revendication 1, un réseau de points de mesure (6) et un second dispositif d'interface (26) pour un réseau de points de mesure comprenant une première interface agencée pour la communication avec le réseau de points de mesure (6) et une seconde interface agencée pour la communication avec un compteur de consommation électrique (30).

9. Système selon la revendication 8, **caractérisé en ce que** la seconde interface du second dispositif d'interface pour un réseau de points de mesure est agencée pour la communication avec une interface, de préférence avec l'interface I3 d'un contrôleur - MUC-C - polyvalent de communication (28).

10. Système selon la revendication 9 ou 10, **caractérisé en ce qu'**il est prévu un dispositif d'interface à grande distance comprenant une première interface agencée pour la communication avec le réseau de points de mesure (6) et une seconde interface agencée pour la communication avec un réseau à grande distance (32).
